# EUROPEAN PATENT SPECIFICATION

(11) **EP 2 722 250 B1**
(45) Date of publication and mention of the grant of the patent: **20.07.2016**
(21) Application number: 12188697.2
(22) Date of filing: 16.10.2012
(51) Int. Cl.: B61L 29/30, B61L 23/04

(54) **System and method for object detection**
System und Verfahren zur Objekterkennung
Système et procédé de détection d'objet

(43) Date of publication of application: 23.04.2014
(73) Proprietor: Progress Rail Inspection & Information Systems S.r.l., 40134 Bologna (IT)
(72) Inventor: Agostini, Alessandro, 50134 FIRENZE (IT); Ricci, Andrea, 50124 FIRENZE (IT); Tili, Marco, 59021 VAIANO PO (IT)
(74) Representative: Modiano, Micaela Nadia

(56) References cited:
- US-A1- 2004 104 822
- US-B1- 6 340 139
- SUZAN P ET AL: "Gefahrenfreiraummeldung mit Radarscanner", SIGNAL + DRAHT, TELZLAFF VERLAG GMBH. DARMSTADT, DE, vol. 6/99, 1 June 1999 (1999-06-01), pages 23-27, XP001525463, ISSN: 0037-4997
- PICKEL P: "NEUE VOLLAUTOMATISCHE GEFAHRENRAUM-FREIMELDEANLAGE GFR", SIGNAL + DRAHT, TELZLAFF VERLAG GMBH. DARMSTADT, DE, vol. 89, no. 12, 1 December 1997 (1997-12-01), pages 41-43, XP000779908, ISSN: 0037-4997

## Description

### Technical Field

This disclosure relates to the field of scanning methods and systems and in particular to scanning for object in a restricted area.

### Background

Scanning systems are generally used to detect objects within an area under surveillance. Scanning systems may be used at railway crossings to detect an intrusion onto the rail tracks after the rail crossing barriers have been closed when an approaching train is detected.

Scanning systems may rely on reflectors that reflect frequency-modulated radar and utilize the frequency and amplitude differences between the transmitted and reflected signal to determine the presence of an object in the surveillance area. Other prior scanning systems may use transmitter and receivers that are responsive to the reflections of signals from the objects and do not utilize a reflector or detect the presence of a signal from the reflector.

Several systems have been developed which utilize microwave detection systems. U.S.7295111 B2 describes a system having a transmitter that may send a signal and a modulating reflector that may receive the transmitted signal. The modulation reflector may comprise a modulator to receive the received signal and to generate a modulated signal. The modulated signal may be re-transmitted and received by the original receiver.

U.S.2008136632 A1 describes a system and method for automatically detecting intrusion in an off-limit zone. The system may include a transmitter for transmitting a signal along a path covering the off-limits zone and a modulating reflector for receiving the transmitted signal. The modulating reflector may transmit a modulated signal. The system may further include a processor coupled to the transmitter and to the receiver, the processor may be configured to process the received modulated signal and to initiate an action as a function of the characteristic in the received modulated signal.

EP 2394882 A1 describes a method for detecting and evaluating scanning signals from defined scanning regions in a first scanning process. Radar scanners may be used to detect railway gates that are positioned in the scanning regions. The signals may be detected and evaluated in a second scanning process during which evaluation of the first scanning process indicate whether the gates are detected at the defined positions. The scanning regions may be adjusted.

Suzan P et al "Gefahrenraumfreimeldung mit Radarscanner" discloses a radar scanner system. The system is based on a microwave radar data exchange and an evaluation method. The system has a connection to monitored crossing protection systems via an interface on the cable termination rack.

The present disclosure is directed, at least in part, to improving or overcoming one or more aspects of the prior art system.

### Brief Summary of the Invention

In a first aspect, the present disclosure describes a system for object detection at a railway crossing is described. The system comprises a plurality of radar transmitters for scanning a surveillance zone; a passive target to determine alignment of a scanning zone of each radar transmitter; and a control unit to evaluate the energy signals received by a plurality of radar receivers.

In a second aspect, the present disclosure describes a method for object detection at a railway crossing, the method comprising activating a plurality of radar transmitters; determining alignment of a scanning zone of each radar transmitter with a passive target; and scanning a surveillance zone for an object upon positive determination of alignment of the scanning zone.

### Brief Description of the Drawings

The foregoing and other features and advantages of the present disclosure will be more fully understood from the following description of various embodiments, when read together with the accompanying drawings, in which:
Fig. 1 shows a railway crossing with a surveillance zone;
Fig. 2 shows the railway crossing of Fig. 1 with two radars with scanning zones substantially diagonal across the surveillance zone;
Fig. 3 shows the railway crossing of Fig. 1 with four radars in a first embodiment, with scanning zones substantially diagonal across the surveillance zone;
Fig. 4 shows the railway crossing of Fig. 1 with four radars in a second embodiment, with scanning zones substantially lateral across the surveillance zone and covering a single opposed radar; and
Fig. 5 shows the railway crossing of Fig. 1 with four radar scanners in a second embodiment, with scanning zones substantially lateral across the surveillance zone and covering two opposed radar scanners.

### Detailed Description

This disclosure generally relates to a system and a method to detect an object in particular at a railway crossing.

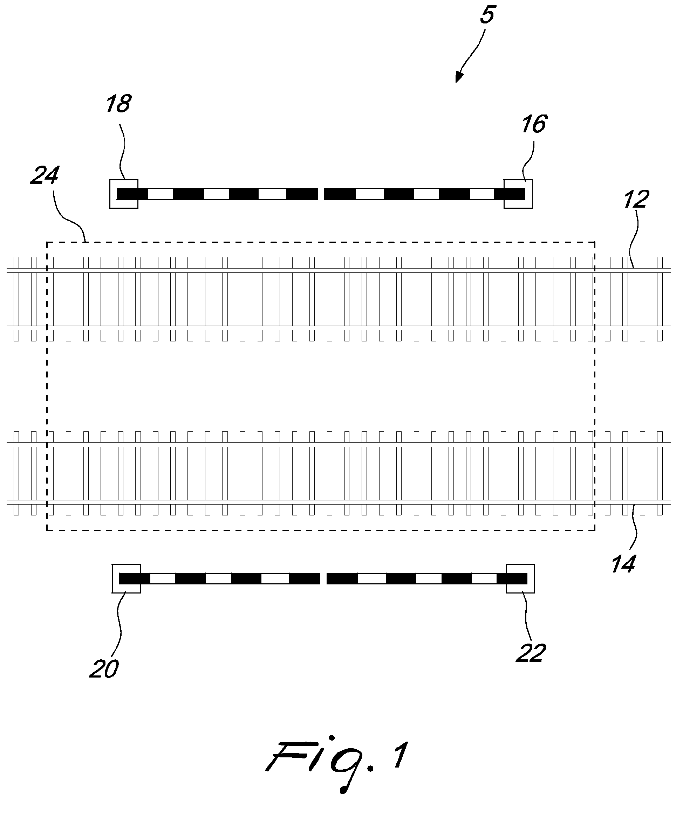

Fig. 1 shows a railway crossing 5. Railway crossing 5 may have two rail tracks 12, 14. The system and method may be used at a railway crossing 5 with only a single track 12. Railway crossing 5 may have barriers 16, 18, 20, 22 to secure the tracks 12, 14 from entry of vehicles. Barriers 16, 18, 20, 22 may secure the railway crossing 5 from entry of vehicles from crossing the rail tracks 12, 14 prior to the passage of a train at the railway crossing 5. Barriers 16, 18, 20, 22 may be lowered prior to arrival of the train and raised after the departure of the train. Barriers 16, 18, 20, 22 may be controlled by a barrier control system that may communicate with other control systems.

The railway crossing **5** may have a crossing area that is susceptible to crossing by persons or vehicles. The presence of a vehicle or a person in the crossing area may present an obstacle to the passing train. The crossing area may be monitored in order ensure that no object, such as a vehicle or person, is present on or at the vicinity of the rail tracks **12, 14** after the barriers **16, 18, 20, 22** are closed.

The railway crossing **5** may have a surveillance zone **24** that is monitored for presence of objects on or at the vicinity of the rail tracks **12, 14.** The surveillance zone **24** may be positioned such that the crossing area may be located within the surveillance zone **24.** The barriers **16, 18, 20, 22** may be located at the borders of the surveillance zone **24.**

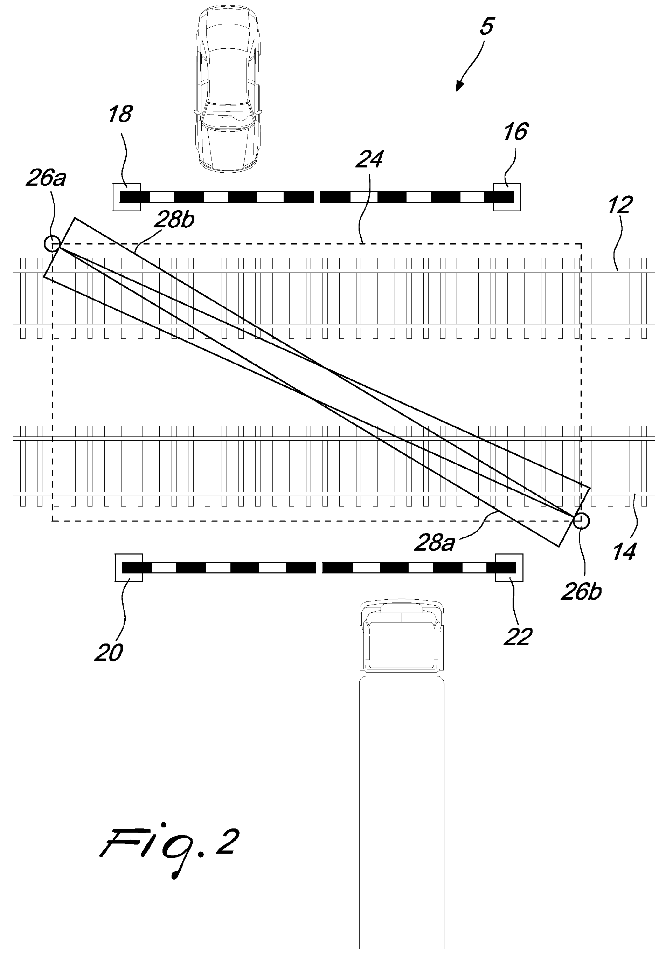

With reference to Figs. 2 to 5, a system **10** for object detection at the railway crossing may comprise a plurality of radar transmitters **26.** The radar transmitters **26** may be provided for scanning the surveillance zone **24.** Each radar transmitter **26** may have a fixed antenna. Each radar transmitter **26** may be a fixed radar transmitter **26.** The radar transmitters **26** may be stationery. The radar transmitters **26** may be continuous wave radars. In an embodiment, the radar transmitters **26** may be frequency modulated continuous wave radars.

The plurality of radar transmitters **26** may have a scanning range. The scanning range may be the distance from each radar transmitter **26** within which an object may be detected. The scanning range of each radar transmitter **26** may extend across surveillance zone **24.** The scanning range of each radar transmitter **26** may extend diagonally across surveillance zone **24.** The scanning range of each radar transmitter **26** may extend laterally across surveillance **zone 24.**

The plurality of radar transmitters **26** may each transmit a scanning beam. The scanning beam may have an aperture angle **30.** The aperture angle **30** may determine the beam width of the scanning beam. In an embodiment, each radar transmitter **26** may have a beam aperture angle of preferably 25°. The beam aperture angle **30** may determine the horizontal coverage of the scanning beam over a horizontal plane. The beam aperture angle **30** may be determined by the fixed antenna.

The plurality of radar transmitters **26** may have a beam elevation angle. The scanning beam angle may determine the altitude coverage of the scanning beam over a vertical plane. The beam elevation angle may be determined by the fixed antenna. The beam elevation angle may be limited to a small angle. In an embodiment, each radar transmitter **26** may have an elevation angle of preferably between -10° to +10°. In an embodiment, each radar transmitter **26** may have an elevation angle of preferably between -5° to +5°. In an embodiment, each radar transmitter **26** may have an elevation angle of preferably between -2.5° to +2.5°.

Each radar transmitter **26** may have a scanning zone **28.** The scanning zone **28** may be determined by the scanning range, the beam aperture angle and the beam elevation angle of the radar transmitter **26.** The scanning zone **28** of each radar transmitter **26** may extend across surveillance zone **24.** The scanning zone **28** of each radar transmitter **26** may extend substantially diagonally across surveillance zone **24.** The scanning zone **28** of each radar transmitter **26** may extend substantially laterally across surveillance zone **24.** The radar transmitters **26** may be suitably positioned so that the respective scanning zones **28** may provide adequate coverage of the surveillance zone **24.** The radar transmitters **26** may be suitably orientated so that the respective scanning zones **28** may provide adequate coverage of the surveillance zone **24.**

In an embodiment, the system **10** may be positioned at an exit to a tunnel or at an entrance to a tunnel.

In an embodiment, the system **10** may be positioned under an overpass. The system **10** may be positioned under an overpass for pedestrians or vehicles.

In an embodiment, the system **10** may be located at a railway crossing **5.**

In an embodiment, the system **10** may be located at a railway crossing **5** positioned at an exit to a tunnel or at an entrance to a tunnel.

With reference to Fig. 2, the system **10** for object detection at the railway crossing **5** may comprise two radar transmitters **26a, 26b.** The scanning beams from each radar transmitter **26a, 26b** may overlap. The scanning zones **28a, 28b** of each radar transmitter **26a, 26b** may overlap. The scanning zones **28a, 28b** of each the radar transmitters **26a, 26b** may partially overlap. The scanning zones **28a, 28b** of the radar transmitters **26a, 26b** may be in complete overlap.

The two radar transmitters **26a, 26b** may be positioned so as to be facing each other. The two radar transmitters **26a, 26b** may face each other such that the scanning beams may be directed at each other. The respective transmitted scanning beams from each radar transmitter **26a, 26b** may reach the opposed radar transmitter **26a, 26b.** Opposed radar transmitters **26a, 26b** may be positioned at opposite areas of the surveillance zone **24** and may be facing each other.

The two radar transmitters **26a, 26b** may be positioned on the margin of the surveillance zone **24.** The two radar transmitters **26a, 26b** may be positioned at vertices of the surveillance zone **24.** The two radar transmitters **26a, 26b** may be positioned at diametrically opposite vertices of the surveillance zone **24.** In an embodiment, the surveillance zone **24** may be a quadrangle. The two radar transmitters **26a, 26b** may be positioned at diametrically opposite corners of the surveillance zone **24.**

The radar transmitters **26a, 26b** may transmit the scanning beams that travel along a path that is inclined to a side of the surveillance zone **24.** The radar transmitter **26a, 26b** may transmit the respective scanning beams diagonally across the surveillance zone **24.** The radar transmitter **26a, 26b** may transmit the respective scanning beam to the radar transmitter **26a, 26b** that is positioned at a diametrically opposite vertex. The radar transmitters **26a, 26b** may be positioned so that the scanning zones **28a, 28b** may be disposed diagonally over the surveillance zone **24.** The scanning zones **28a, 28b** may be inclined relative to the barrier or barriers **16, 18, 20, 22.**

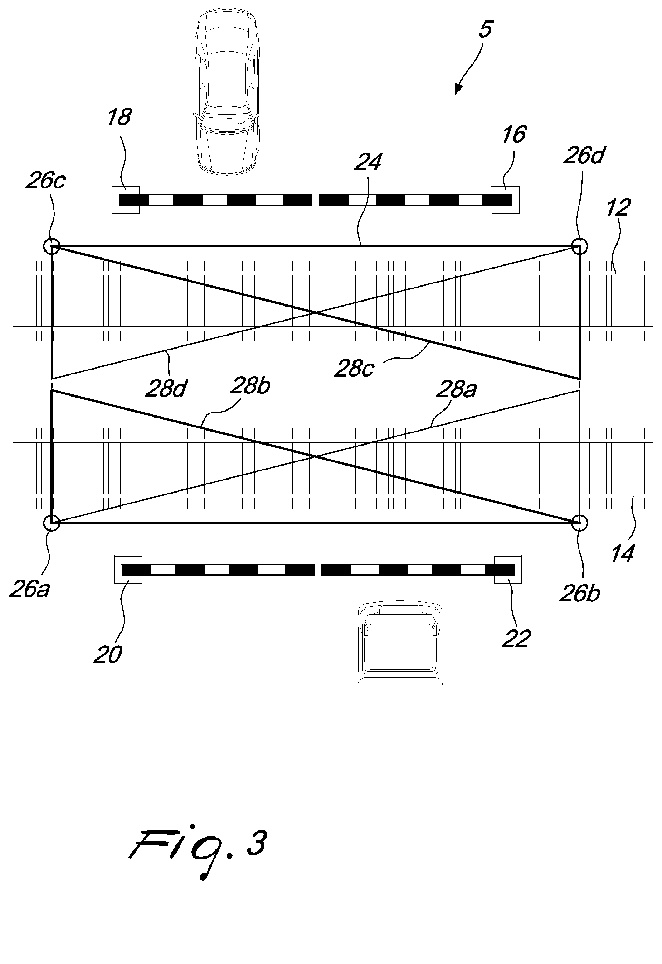

With reference to Fig. 3, the system **10** for object detection at the railway crossing **5** may comprise four radar transmitters **26a, 26b, 26c, 26d.** The scanning beams from each radar transmitter **26a, 26b, 26c, 26d** may overlap. The scanning zones **28a, 28b, 28c, 28d** from a pair of radar transmitters **26a, 26b, 26c, 26d** may overlap. The scanning zones **28a, 28b, 28c, 28d** from a pair of radar transmitters **26a, 26b, 26c, 26d** may be in complete overlap. The scanning zones **28a, 28b, 28c, 28d** of four radar transmitters **26a, 26b, 26c, 26d** may overlap.

The four radar transmitters **26a, 26b, 26c, 26d** may be positioned so that a pair of the radar transmitters **26a, 26b, 26c, 26d** may face each other. The pair of radar transmitters **26a, 26b, 26c, 26d** may face each other such that the scanning beams may be directed at each other. The respective transmitted scanning beams from each radar transmitter **26a, 26b, 26c, 26d** may reach the opposed radar transmitter **26a, 26b, 26c, 26d.** Opposed radar transmitters **26a, 26b, 26c, 26d** may be positioned at opposite areas of the surveillance zone **24** and may be facing each other.

The four radar transmitters **26a, 26b, 26c, 26d** may be positioned on the margin of the surveillance zone **24.** The four radar transmitters **26a, 26b, 26c, 26d** may be positioned at vertices of the surveillance zone **24.** A pair of radar transmitters **26a, 26b, 26c, 26d** may be positioned at diametrically opposite vertices of the surveillance zone **24.** In an embodiment, the pair of radar transmitters **26a, 26b, 26c, 26d** may be positioned at adjacent vertices of the surveillance zone **24.** In an embodiment, the surveillance zone **24** may be a quadrangle. The four radar transmitters **26a, 26b, 26c, 26d** may be positioned at each corner of the surveillance zone **24.**

The radar transmitters **26a, 26b, 26c, 26d** may transmit the scanning beams such that the beams travel along a path that is parallel to a side of the surveillance zone **24.** The scanning beams may travel substantially laterally across the surveillance zone **24.** Each radar transmitter **26a, 26b, 26c, 26d** may transmit the scanning beam to a radar transmitter **26** that is positioned at an adjacent vertex.

A first pair of radar transmitters **26a, 26b** may be positioned so that the respective first pair of scanning beams travel over a part of the surveillance zone **24** adjacent the barrier or barriers **20, 22** at a side of the railway crossing **5.** The scanning zones **28a, 28b** may be positioned over a path that is substantially parallel to the barrier or barriers **20, 22.** The scanning zones **28a, 28b** may be positioned over track **14** adjacent the barrier or barriers **20, 22.** The scanning zones **28a, 28b** may be substantially lateral across the surveillance zone **24.**

The second pair of radar transmitters **26c, 26d** may be positioned so that the respective second pair of scanning beams travel over an opposite part of the surveillance zone **24** adjacent the barrier or barriers **16, 18** at an opposite side of the railway crossing **5.** The scanning zones **28c, 28d** may be positioned over a path that is substantially parallel to the barrier or barriers **16, 18.** The scanning zones **28c, 28d** may be positioned over track **14** adjacent the barrier or barriers **16, 18.** The scanning zones **28c, 28d** may be substantially lateral across the surveillance zone **24..**

As an example, the scanning beam from a single radar transmitter **26a** may be transmitted towards an opposite positioned radar transmitter **26b.** The scanning zone **28a** of the radar transmitter **26a** may include the opposite positioned radar transmitter **26b.** The scanning zone **28a** of the radar transmitter **26a** may include the opposite positioned radar transmitter **26b** and extend partway between the radar transmitters **26b** and **26d.**

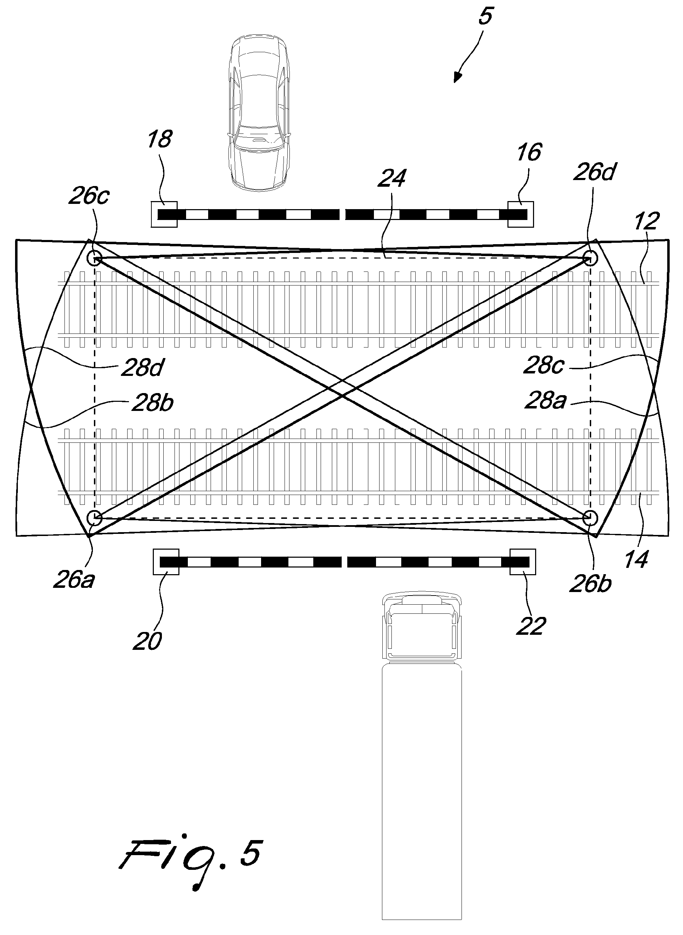

In an embodiment, with reference to Fig. 5, the scanning beam from a single radar transmitter **26a** may be transmitted towards the opposite positioned radar transmitter **26b** and the diagonally positioned radar transmitter **26d.** The scanning zone **28a** of the radar transmitter **26a** may include the opposite positioned radar transmitter **26b** and the diagonally positioned radar transmitter **26d.**

The scanning beams of radar transmitters **26b, 26c, 26d** and the scanning zones **28b, 28c, 28d** may have the same characteristics as described above with respect to the scanning beam of radar transmitter **26a** and the scanning zone **28a.**

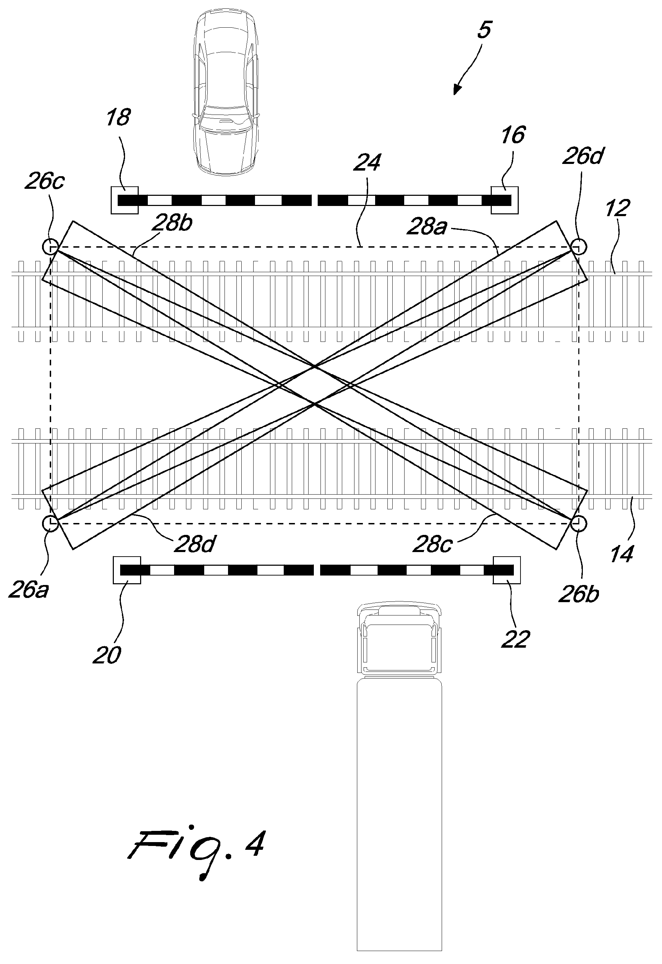

With reference to Fig. 4, the radar transmitter **26a, 26b, 26c, 26d** may transmit the scanning beams that travel along a path that is inclined to a side of the surveillance zone **24.** The radar transmitter **26a, 26b, 26c, 26d** may transmit the respective scanning beams diagonally across the surveillance zone **24.** The radar transmitter **26a, 26b, 26c, 26d** may transmit the respective scanning beam to the radar transmitter **26a, 26b, 26c, 26d** that is positioned at a diametrically opposite vertex.

A first pair of radar transmitters **26a, 26b** may be positioned so that the respective first pair of scanning beams travel diagonally over a part of the surveillance zone **24.** The first pair of scanning beams may be inclined relative to the barrier or barriers **16, 18, 20, 22.** The first pair of radar transmitters **26a, 26d,** may be positioned so that the respective first pair of scanning zones **28a, 28d** may be positioned diagonally over the surveillance zone **24.** The first pair of scanning zones **28a, 28d** may be inclined relative to the barrier or barriers **16, 18, 20,22.**

The second pair of radar transmitters **26b, 26c** may be positioned so that the respective second pair scanning beams travel diagonally over the surveillance zone **24** and transverse to the first pair of scanning beams transmitted by the first pair of radar transmitters **26.** The second pair of scanning beams may be inclined relative to the barrier or barriers **16, 18, 20, 22.** The second pair of radar transmitters **26b, 26c** may be positioned so that the respective second pair of scanning zones **28b, 28c** may be positioned diagonally over the surveillance zone **24.** The second pair of scanning zones **28b, 28c** may be inclined relative to the barrier or barriers **16, 18, 20, 22.**

As an example, the scanning beam from a single radar transmitter **26a** may be transmitted towards an opposed radar transmitter **26d.** The scanning zone **28a** of the radar transmitter 26a may include the opposed radar transmitter **26d.**

The scanning beams of radar transmitters **26b, 26c, 26d** and the scanning zones **28b, 28c, 28d** may have the same characteristics as described above with respect to the scanning beam of radar transmitter **26a** and the scanning zone **28a.**

The system **10** for object detection at the railway crossing may comprise passive targets. Each passive target is available for scanning by a respective radar transmitter **26a, 26b, 26c, 26d.** The passive targets may be disposed within the surveillance zone **24.** The passive targets may be disposed at a position within the surveillance zone **24** where the scanning zone **28a, 28b, 28c, 28d** of a respective radar transmitter **26a, 26b, 26c, 26d** is expected to be located. In an embodiment, the passive targets may be positioned at the location of each radar transmitter **26a, 26b, 26c, 26d.** The passive target may be positioned on a support carrying the radar transmitter **26a, 26b, 26c, 26d.** The

With respect to the first embodiment, in Fig. 5, with four radar transmitters **26a, 26b, 26c, 26d,** a single passive target may be positioned at an overlapping scanning zone **28a, 28b, 28c, 28d** that extends to cover two radar transmitters **26a, 26b, 26c, 26d.** As an example, a single passive target may be positioned between radar transmitters **26b** and **26d** with scanning zone **28a** covering radar transmitters **26b** and **26d** and scanning zone **28c** covering radar transmitters **26b** and **26d.** In another example, the single passive target may be positioned between radar transmitters **26b** and **26d** with scanning zone **28a** covering radar transmitters **26b** and **26d** and scanning zone **28c** covering radar transmitter **26b** and the passive target.

Any single point at the surveillance zone **24** may be covered by at least two radar transmitters **26a, 26b, 26c, 26d.** At any point on the surveillance zone **24** there may be two overlapping scanning zones **28a, 28b, 28c, 28d.** The entire surveillance zone may be covered by at least two overlapping scanning zones **28a, 28b, 28c, 28d.** The coverage by at least two overlapping scanning zones **28a, 28b, 28c, 28d** may provide an enhanced detection levels of an obstacle.

A single passive target may be positioned with respect to radar transmitters **26b** and **26d** and the scanning zones **28a** and **28c** as described above with respect to the radar transmitters **26a** and **26c** and the scanning zones **28a** and **28c.**

The passive targets may be reflectors that reflect the scanning beams transmitted by the respective radar transmitter **26a, 26b, 26c, 26d.** In order to determine alignment of the each scanning zone **28a, 28b, 28c, 28d,** each radar transmitter **26a, 26b, 26c, 26d** may transmit scanning beams to locate the respective passive target. The passive targets may reflect the scanning beams transmitted by the respective radar transmitters **26a, 26b, 26c, 26d.**

The scanning zone **28a, 28b, 28c, 28d** may be in alignment at the surveillance zone **24** when the passive target is within the respective scanning zone **28a, 28b, 28c, 28d.** The scanning zone **28a, 28b, 28c, 28d** may be in alignment at the surveillance zone **24** when the corresponding passive target reflects the transmitted scanning beam from the respective radar transmitter **26a, 26b, 26c, 26d.**

The scanning zone **28a, 28b, 28c, 28d** may be out of alignment at the surveillance zone **24** when the passive target is outside the respective scanning zone **28a, 28b, 28c, 28d.** The scanning zone **28a, 28b, 28c, 28d** may be out of alignment at the surveillance zone **24** when the corresponding passive target does not reflect the transmitted scanning beam from the respective radar transmitter **26a, 26b, 26c, 26d.** The scanning zone **28a, 28b, 28c, 28d** may be out of alignment as the transmitted scanning beam may not be directed at the corresponding passive target.

In an embodiment at least two passive targets may be provided for the alignment check. Each radar transmitter **26a, 26b, 26c, 26d** may scan for at least two passive targets. The scanning zone **28a, 28b, 28c, 28d** may be in alignment at the surveillance zone **24** when the both passive targets are within the respective scanning zone **28a, 28b, 28c, 28d.** The scanning zone **28a, 28b, 28c, 28d** may be in alignment at the surveillance zone **24** when both of the corresponding passive targets reflect the transmitted scanning beam from the respective radar transmitter **26a, 26b, 26c, 26d.**

The scanning zone **28a, 28b, 28c, 28d** may be out of alignment at the surveillance zone **24** when one or both of the passive targets are outside the respective scanning zone **28a, 28b, 28c, 28d.** The scanning zone **28a, 28b, 28c, 28d** may be out of alignment at the surveillance zone **24** when both of the corresponding passive target do not reflect the transmitted scanning beam from the respective radar transmitter **26a, 26b, 26c, 26d.** The scanning zone **28a, 28b, 28c, 28d** may be out of alignment at the surveillance zone **24** when one corresponding passive target does not reflect the transmitted scanning beam from the respective radar transmitter **26a, 26b, 26c, 26d.**

The two passive targets may be positioned at the extreme points of the scanning zone **28a, 28b, 28c, 28d** within the surveillance zone **24.**

The system **10** for object detection at the railway crossing comprises a control unit to evaluate the energy signals received by a plurality of radar receivers. The control unit may be in electronic communication with the radar transmitters **26a, 26b, 26c, 26d** and with the radar receivers. According to the invention, the control unit evaluates the energy signals received by the radar receivers and compares the received energy signals to expected energy signals. The control may determine the presence of an object within the surveillance zone 24 based on the comparison of the received energy signals to expected energy signals. The control unit may update the expected energy signal as part of a moving average algorithm.

Each radar transmitter **26a, 26b, 26c, 26d** may be accompanied with respective radar receiver. In an embodiment, the fixed antenna may serve as a transmitter and a receiver.

In order to determine integrity of each radar transmitter **26a, 26b, 26c, 26d** scanning beams may be transmitted to the receiver of the opposed radar transmitter **26a, 26b, 26c, 26d.** The signals received by the receiver may be processed by the control unit. The radar transmitter **26a, 26b, 26c, 26d** may be considered to be in a working condition when the scanning beam that is transmitted is received by the radar receiver of the opposed radar transmitter **26a, 26b, 26c, 26d.**

An integrity cross check may be performed between oppositely positioned radar transmitters **26a, 26b, 26c, 26d** and the associated radar receivers. The cross check may comprise sending scanning beams by both the radar transmitters **26a, 26b, 26c, 26d** to the opposed radar transmitters **26a, 26b, 26c, 26d.** The scanning beams may be received by the respective radar receivers.

Each radar transmitter **26a, 26b, 26c, 26d** may be positioned at the surveillance zone **24** so to cover both a radar receiver and a passive target.

Each radar transmitter **26a, 26b, 26c, 26d** may be positioned at a height of approximately 1 meter. Each radar transmitter **26a, 26b, 26c, 26d** may be positioned at a height of approximately 1 meter from the rail tracks **12, 14.** Each radar receiver may be positioned at a height of approximately 1 meter. Each radar receiver may be positioned at a height of approximately 1 meter from the rail tracks **12, 14.** Each radar transmitter **26a, 26b, 26c, 26d** may be carried by a support.

A method for object detection at a railway crossing may comprise activating the plurality of radar transmitters **26a, 26b, 26c, 26d** and scanning the passive target to determine alignment of a scanning zone **28a, 28b, 28c, 28d** of each radar transmitter **26a, 26b, 26c, 26d.** The passive targets may be scanned by respective radar transmitters **26a, 26b, 26c, 26d.** The radar transmitter **26a, 26b, 26c, 26d** may transmit scanning beam towards an area in the surveillance zone **24.** The passive targets may be within the surveillance zone **24.** The plurality of radar transmitters **26a, 26b, 26c, 26d** may scan the surveillance zone **24** for an object upon positive determination of alignment of the scanning zone **28a, 28b, 28c, 28d.**

The step of activating the plurality of radar transmitters **26a, 26b, 26c, 26d** may comprise activating the radar transmitters **26a, 26b, 26c, 26d** in sequence. The step of activating the plurality of radar transmitters **26a, 26b, 26c, 26d** may comprise activating the radar transmitters **26a, 26b, 26c, 26d** sequentially.

The method may further comprise the step of transmitting a scanning beam to an opposed radar transmitter **26a, 26b, 26c, 26d.** The transmitted scanning beam may be received by a radar receiver of the opposed radar transmitter **26a, 26b, 26c, 26d.** The passive target may be positioned at each radar transmitter **26a, 26b, 26c, 26d.** The passive target may be available for scanning by respective radar transmitters **26a, 26b, 26c, 26d.** The scanning zones **28a, 28b, 28c, 28d** may overlap at the surveillance zone **24.**

The method may further comprise a step of acquiring a signal indicative that the barriers **16, 18, 20, 22** that are associated with the railway crossing **10** are closed or are closing. Activation of the plurality of radar transmitters **26a, 26b, 26c, 26d** may be initiated upon receipt of the signal that the barriers **16, 18**, **20, 22** are closed or are closing.

The signal may be received by the control unit. The control unit may be in electronic communication with the barrier control system. The control unit may activate the radar transmitters **26a, 26b, 26c, 26d** sequentially upon receipt of the signal that the barriers **16,18, 20, 22** are closed. In an embodiment, the control unit may not activate the radar transmitters **26a, 26b, 26c, 26d** if the signal that the barriers **16**, **18**, **20, 22** are closed is not received.

The step of scanning the surveillance zone **24** may comprise evaluating the energy signal from the surveillance zone **24** and comparing the evaluated energy signal with expected background energy signal.

The method further comprises a step of sending a signal indicative of the presence or absence of an object in the surveillance zone **24.** The expected background energy signal may be revised as a part of a moving average algorithm. The plurality of radar transmitters **26a, 26b, 26c, 26d** comprise four radar transmitters **26a, 26b, 26c, 26d,** wherein pairs of radar transmitters **26a, 26b, 26c, 26d** are disposed at diametrically opposite vertices of the surveillance zone **24.** In an embodiment, the plurality of radar transmitters **26a, 26b, 26c, 26d** may comprise two radar transmitters **26a, 26b** disposed at diametrically opposite vertices of the surveillance zone **24.**

The method may acquire a signal from the barrier control system that the barriers **16, 18, 20, 22** are closed, are closing. or that a train is approaching. The surveillance zone **24** may be scanned and background energy signal (S) may be received by radar receivers. The background energy signal is compared to background expected energy (B). If |S-B| < pre-computed threshold then the surveillance zone **24** may be determined not to have an object present in the surveillance zone **24.** The integrity check may then be initiated through cross checks of radar receivers and radar transmitters **26a, 26b, 26c, 26d.** Each radar transmitter **26a, 26b, 26c, 26d** may be switched on in sequence so as to transmit a scanning beam to the front opposed radar receivers. If integrity check is fulfilled then a signal indicative that no object is present at the surveillance **24** is sent to the train through a fail-safe train signaling interface.

The radar transmitters **26a, 26b, 26c, 26d** may perform an alignment check by scanning for a single or multiple passive targets. The alignment check may be performed by radar transmitters **26a, 26b, 26c, 26d** scanning for a single or multiple passive targets. The alignment check may be performed after the integrity check and prior to sending of the signal. In an embodiment, the alignment check may be performed before the integrity check.

Thereafter, the background expected energy B is updated by the moving average as: Bnew= (S + B(n-1)/n. Through the moving average the background expected energy B may be revised to take into account weather conditions.

In an embodiment, the background expected energy B may be updated only when an object is determined to be present at or in the vicinity of the tracks **12, 14.** In an embodiment, the background expected energy B may be updated only when an object is determined not to be present at or in the vicinity of the tracks **12, 14.**

The moving average may be based on scans that have fulfilled the integrity checks.

In an embodiment, the background energy signal S or background expected energy signal B may be computed from multiple scans over a minimum and a maximum distance, for example S or B may be computed from 1000 sample scans between 1 to 25 meters. Each sample point may contribute, though an associated sampled value, to the S or B energy signals. The detection algorithm may use the total energy signal rather than an individual point energy signals for comparison with a predetermined threshold value.

The background energy signal S or background expected energy signal B may be computed by a summation of the multiple scan values over a minimum and a maximum distance. The background energy signal S or background expected energy signal B may be computed by an average of the multiple scan values over a minimum and a maximum distance.

The skilled person would appreciate that foregoing embodiments may be modified or combined to obtain the method and system for obstacle detection of the present disclosure.

### Industrial Applicability

This disclosure describes a method and a system for scanning a crossing area at the railway crossing **5.** The area under surveillance may be located between barriers **16, 18, 20, 22** at the railway crossing **5.** The method and system may use radar transmitters **26a, 26b, 26c, 26d** and receivers for scanning the area under surveillance.

The method and system may scan the surveillance zone **24.** The method and system may accurately read and interpret scanned signals in order to detect an object in the surveillance area **24** with accuracy. The method and system may detect the presence of an object on or at the vicinity of the tracks **12, 14.** Upon detection of an object, the method and system may signal the approaching train to stop. The method and system may signal the approaching train to stop if the surveillance zone **24** is occupied by an object of a minimum specified size.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A system for object detection at a railway crossing, the system comprising:
a plurality of radar transmitters (26a, 26b, 26c, 26d) for scanning a surveillance zone (24);
a passive target to determine alignment of a scanning zone (28a, 28b, 28c, 28d) of each radar transmitter (26a, 26b, 26c, 26d); and
a control unit to evaluate the energy signals received by a plurality of radar receivers **characterised in that** the control unit is configured to evaluate an energy signal from the surveillance zone (24) and to compare the evaluated energy signal with expected background energy signal.

2. The system of claim 1 wherein each radar transmitter (26a, 26b, 26c, 26d) has a fixed antenna.

3. The system of claim 1 or 2 wherein the aperture angle of each radar transmitter (26a, 26b, 26c, 26d) is 25°.

4. The system of claim 1, 2 or 3 wherein a passive target is positioned at each radar transmitter (26a, 26b, 26c, 26d).

5. The system of any one of proceeding claims wherein the plurality of radar transmitters (26a, 26b, 26c, 26d) comprise two radar transmitters (26a, 26b) disposed at diametrically opposite vertices of the surveillance zone (24).

6. The system of any one of proceeding claims 1 to 4 wherein the plurality of radar transmitters (26a, 26b, 26c, 26d) comprise four radar transmitters (26a, 26b, 26c, 26d), wherein pairs of radar transmitters (26a, 26b, 26c, 26d) are disposed at diametrically opposite vertices of the surveillance zone (24).

7. A method for object detection at a railway crossing (5), the method comprising:
activating a plurality of radar transmitters (26a, 26b, 26c, 26d);
determining alignment of a scanning zone (28a, 28b, 28c, 28d) of each radar transmitter (26a, 26b, 26c, 26d) with a passive target; and
scanning a surveillance zone (24) for an object upon positive determination of alignment of the scanning zone (28a, 28b, 28c, 28d) **characterised by** the steps of evaluating an energy signal from the surveillance zone (24) and comparing the evaluated energy signal with expected background energy signal.

8. The method of claim 7 wherein the step of activating the plurality of radar transmitters (26a, 26b, 26c, 26d) comprises activating the radar transmitters (26a, 26b, 26c, 26d) sequentially.

9. The method of claim 7 or 8 further comprising the step of transmitting a scanning beam to an opposed radar transmitter (26a, 26b, 26c, 26d).

10. The method of claim 9 wherein the transmitted scanning beam is received by a radar receiver of the opposed radar transmitter (26a, 26b, 26c, 26d).

11. The method of any one of preceding claims 7 to 10 wherein the scanning zones (28a, 28b, 28c, 28d) overlap at the surveillance zone (24).

12. The method of any one of preceding claims 7 to 10 further comprising step of acquiring a signal indicative that barriers (16, 18, 20, 22) associated with the railway crossing (5) are closed.

13. The method of claim 7 wherein the energy signal from the surveillance zone (24) and the expected background energy signal is computed from multiple scans over a minimum and a maximum distance.

14. The method of claim 13 wherein the expected background energy signal is revised as a part of a moving average algorithm.

## Patentansprüche

1. Ein System zur Objekterkennung an einem Bahnübergang, wobei das System Folgendes umfasst:
eine Vielzahl von Radartransmittern (26a, 26b, 26c, 26d) zum Überwachen einer Überwachungszone (24);
ein passives Ziel zum Bestimmen des Abgleichs einer Abtastzone (28a, 28b, 28c, 28d) jedes Radartransmitters (26a, 26b, 26c, 26d); und
eine Steuereinheit zur Bewertung der Energiesignale, die von einer Vielzahl von Radarempfängern empfangen werden, **dadurch gekennzeichnet, dass** die Steuereinheit konfiguriert ist, um ein Energiesignal von der Überwachungszone (24) auszuwerten und um das ausgewertete Energiesignal mit dem erwarteten Hintergrund-Energiesignal zu vergleichen.

2. Das System gemäß Anspruch 1, worin jeder Radartransmitter (26a, 26b, 26c, 26d) eine Festantenne hat.

3. Das System gemäß Anspruch 1 oder 2, worin der Öffnungswinkel jedes Radartransmitters (26a, 26b, 26c, 26d) 25° beträgt.

4. Das System gemäß Anspruch 1, 2 oder 3, worin ein passives Ziel an jedem Radartransmitter (26a, 26b, 26c, 26d) positioniert ist.

5. Das System gemäß einem beliebigen der obigen Ansprüche, worin die Vielzahl von Radartransmittern (26a, 26b, 26c, 26d) zwei Radartransmitter (26a, 26b) umfasst, die an diametral gegenüberliegenden Scheitelpunkten der Überwachungszone (24) angeordnet sind.

6. Das System gemäß einem beliebigen der obigen Ansprüche 1 bis 4, worin die Vielzahl von Radartransmittern (26a, 26b, 26c, 26d) vier Radartransmitter (26a, 26b, 26c, 26d) umfasst, wobei Paare von Radartransmittern (26a, 26b, 26c, 26d) an diametral gegenüberliegenden Scheitelpunkten der Überwachungszone (24) angeordnet sind.

7. Ein Verfahren zur Objekterkennung an einem Bahnübergang (5), wobei das Verfahren Folgendes umfasst:
Aktivieren einer Vielzahl von Radartransmittern (26a, 26b, 26c, 26d);
Bestimmen eines Abgleichs einer Abtastzone (28a, 28b, 28c, 28d) jedes Radartransmitters (26a, 26b, 26c, 26d) mit einem passiven Ziel; und
Überwachen einer Überwachungszone (24) nach einem Objekt bei positiver Bestimmung des Abgleichs der Abtastzone (28a, 28b, 28c, 28d), **gekennzeichnet durch** die Schritte der Auswertung eines Energiesignals von der Überwachungszone (24) und des Vergleichs des ausgewerteten Energiesignals mit dem erwarteten Hintergrund-Energiesignal.

8. Das Verfahren gemäß Anspruch 7, worin der Schritt des Aktivierens der Vielzahl von Radartransmittern (26a, 26b, 26c, 26d) ein sequentielles Aktivieren der Radartransmitter (26a, 26b, 26c, 26d) umfasst.

9. Das Verfahren gemäß Anspruch 7 oder 8, das weiter den Schritt des Sendens eines Abtaststrahls an einen gegenüberliegenden Radartransmitter (26a, 26b, 26c, 26d) umfasst.

10. Das Verfahren gemäß Anspruch 9, worin der gesendete Abtaststrahl von einem Radarempfänger des gegenüberliegenden Radartransmitters (26a, 26b, 26c, 26d) empfangen wird.

11. Das Verfahren gemäß einem beliebigen der obigen Ansprüche 7 bis 10, worin die Abtastzonen (28a, 28b, 28c, 28d) sich in der Überwachungszone (24) überlagern.

12. Das Verfahren gemäß einem beliebigen der obigen Ansprüche 7 bis 10, das weiter den Schritt des Erfassens eines Signals umfasst, welches anzeigt, dass mit dem Bahnübergang (5) verbundene Schranken (16, 18, 20, 22) geschlossen sind.

13. Das Verfahren gemäß Anspruch 7, worin das Energiesignal aus der Überwachungszone (24) und dem erwarteten Hintergrund-Energiesignal aus mehreren Scans über einen Mindest- und einen Höchstabstand berechnet wird.

14. Das Verfahren gemäß Anspruch 13, worin das erwartete Hintergrund-Energiesignal als Teil eines Algorithmus mit gleitendem Mittelwert überarbeitet wird.

## Revendications

1. Système pour détecter un objet sur un passage à niveau, le système comportant :
une pluralité d'émetteurs radar (26a, 26b, 26c, 26d) pour balayer une zone à surveiller (24) ;
une cible passive pour déterminer l'alignement d'une zone de balayage (28a, 28b, 28c, 28d) de chaque émetteur radar (26a, 26b, 26c, 26d) ; et
une unité de commande pour évaluer les signaux à énergie reçus par une pluralité de récepteurs radar, **caractérisé en ce que** l'unité de commande est conçue pour évaluer un signal à énergie provenant de la zone à surveiller (24) et pour comparer le signal à énergie évalué avec un signal à énergie de fond attendu.

2. Système selon la revendication 1, dans lequel chaque émetteur radar (26a, 26b, 26c, 26d) a une antenne fixe.

3. Système selon la revendication 1 ou 2, dans lequel un angle d'ouverture de chaque émetteur radar (26a, 26b, 26c, 26d) est de 25°.

4. Système selon la revendication 1, 2 ou 3, dans lequel une cible passive est placée sur chaque émetteur radar (26a, 26b, 26c, 26d).

5. Système selon l'une quelconque des revendications précédentes, dans lequel la pluralité d'émetteurs radar (26a, 26b, 26c, 26d) comprend deux émetteurs radar (26a, 26b) disposés à des sommets diamétralement opposés de la zone à surveiller (24).

6. Système selon l'une quelconque des revendications précédentes, dans lequel la pluralité d'émetteurs radar (26a, 26b, 26c, 26d) comprend quatre émetteurs radar (26a, 26b, 26c, 26d), des paires d'émetteurs radar (26a, 26b, 26c, 26d) étant disposées à des sommets de la zone à surveiller (24).

7. Procédé pour détecter un objet sur un passage à niveau (5), le procédé comportant :
L'activation d'une pluralité d'émetteurs radar (26a, 26b, 26c, 26d),
la détermination de l'alignement d'une zone de balayage (28a, 28b, 28c, 28d) de chaque émetteur radar (26a, 26b, 26c, 26d) avec une cible passive ; et
le balayage d'une zone à surveiller (24) pour y détecter un objet à l'instant d'une détermination positive d'alignement de la zone de balayage (28a, 28b, 28c, 28d), **caractérisé par** les étapes d'évaluation d'un signal à énergie provenant de la zone à surveiller (24) et de comparaison du signal à énergie évalué par un signal à énergie de fond attendu.

8. Procédé selon la revendication 7, dans lequel l'étape d'activation de la pluralité d'émetteurs radar (26a, 26b, 26c, 26d) comprend l'activation successive des émetteurs radar (26a, 26b, 26c, 26d).

9. Procédé selon la revendication 7 ou 8, comportant en outre l'étape d'émission d'un faisceau de balayage vers un émetteur radar opposé (26a, 26b, 26c, 26d).

10. Procédé selon la revendication 9, dans lequel le faisceau de balayage émis est reçu par un récepteur radar de l'émetteur radar opposé (26a, 26b, 26c, 26d).

11. Procédé selon l'une quelconque des revendications 7 à 10, dans lequel les zones de balayage (28a, 28b, 278c, 28d) se chevauchent dans la zone à surveiller (24).

12. Procédé selon l'une quelconque des revendications 7 à 10, comportant en outre une étape d'acquisition d'un signal indiquant que des barrières (16, 18, 20, 22) associées au passage à niveau (5) sont fermées.

13. Procédé selon la revendication 7, dans lequel le signal à énergie provenant de la zone à surveiller (24) et le signal à énergie de fond attendu sont calculés à l'aide de multiples balayages sur une distance minimale et une distance maximale.

14. Procédé selon la revendication 13, dans lequel le signal à énergie de fond attendu est révisé dans le cadre d'un algorithme de calcul de moyenne mobile.
